(19) Europäisches Patentamt
European Patent Office
Office européen des brevets

(11) EP 2 271 047 B1

(12) EUROPEAN PATENT SPECIFICATION

(45) Date of publication and mention of the grant of the patent:
01.11.2017 Bulletin 2017/44

(51) Int Cl.:
*H04L 29/06* $^{(2006.01)}$

(21) Application number: 09163358.6

(22) Date of filing: 22.06.2009

(54) **Game theoretic recommendation system and method for security alert dissemination**

Spieltheorieempfehlungssystem und Verfahren zur Sicherheitswarnungsverbreitung

Système de recommandation théorique de jeu et procédé de diffusion d'alerte de sécurité

(84) Designated Contracting States:
AT BE BG CH CY CZ DE DK EE ES FI FR GB GR HR HU IE IS IT LI LT LU LV MC MK MT NL NO PL PT RO SE SI SK TR

(43) Date of publication of application:
05.01.2011 Bulletin 2011/01

(73) Proprietor: Deutsche Telekom AG
53113 Bonn (DE)

(72) Inventors:
• ALPCAN, Tansu
10625 Berlin (DE)
• LIU, Xing
10555 Berlin (DE)

(74) Representative: Vossius & Partner
Patentanwälte Rechtsanwälte mbB
Siebertstrasse 3
81675 München (DE)

(56) References cited:
• NGUYEN K C ET AL: "Stochastic games for security in networks with interdependent nodes" GAME THEORY FOR NETWORKS, 2009. GAMENETS '09. INTERNATIONAL CONFERENCE ON, IEEE, PISCATAWAY, NJ, USA, 13 May 2009 (2009-05-13), pages 697-703, XP031481363 ISBN: 978-1-4244-4176-1

• WEI JIANG ET AL: "A Stochastic Game Theoretic Approach to Attack Prediction and Optimal Active Defense Strategy Decision" NETWORKING, SENSING AND CONTROL, 2008. ICNSC 2008. IEEE INTERNATIONAL CONFERENCE ON, IEEE, PISCATAWAY, NJ, USA, 6 April 2008 (2008-04-06), pages 648-653, XP031255247

• ALPCAN T ET AL: "A game theoretic approach to decision and analysis in network intrusion detection" 42ND. IEEE CONFERENCE ON DECISION AND CONTROL.(CDC). MAUI, HI, DEC. 9 20031209; 20031209 - 20031212 NEW YORK, NY : IEEE, US, vol. 3, 9 December 2003 (2003-12-09), pages 2595-2600, XP010685588 ISBN: 978-0-7803-7924-4

• ALPCAN T ET AL: "A game theoretic analysis of intrusion detection in access control systems" DECISION AND CONTROL, 2004. CDC. 43RD IEEE CONFERENCE ON, IEEE, PISCATAWAY, NJ, USA, vol. 2, 14 December 2004 (2004-12-14), pages 1568-1573VOL.2, XP010794476 ISBN: 978-0-7803-8682-2

• TANSU ALPCAN AND TAMER BASAR: "An intrusion detection game with limited observations" INTERNET CITATION 1 July 2006 (2006-07-01), page 9PP, XP007911236 Retrieved from the Internet: URL:http://www.tansu.alpcan.org/papers/isd g06.pdf> [retrieved on 2009-01-20]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- XIA ZHENGYOU ET AL: "A kind of network security behavior model based on game theory" PARALLEL AND DISTRIBUTED COMPUTING, APPLICATIONS AND TECHNOLOGIES, 200 3. PDCAT'2003. PROCEEDINGS OF THE FOURTH INTERNATIONAL CONFERENCE ON AUG. 27 - 29, 2003, PISCATAWAY, NJ, USA,IEEE, 27 August 2003 (2003-08-27), pages 950-954, XP010661478 ISBN: 978-0-7803-7840-7
- WEI JIANG ET AL: "Optimal Network Security Strengthening Using Attack-Defense Game Model" INFORMATION TECHNOLOGY: NEW GENERATIONS, 2009. ITNG '09. SIXTH INTERNATIONAL CONFERENCE ON, IEEE, PISCATAWAY, NJ, USA, 27 April 2009 (2009-04-27), pages 475-480, XP031472304 ISBN: 978-1-4244-3770-2
- PELDSCHUS F ET AL: "Fuzzy matrix games multi-criteria model for decision-making in engineering" INFORMATICA, LITHUANIAN ACADEMY OF SCIENCE, vol. 16, no. 1, 1 January 2005 (2005-01-01), pages 107-120, XP007911238 ISSN: 0868-4952
- GARAGIC AND J B CRUZ JR D: "An Approach to Fuzzy Noncooperative Nash Games" JOURNAL OF OPTIMIZATION THEORY AND APPLICATIONS, PLENUM PRESS, LONDON, GB, vol. 118, no. 3, 1 September 2003 (2003-09-01), pages 475-491, XP007911237 ISSN: 0022-3239
- SHAPIRO ET AL: "Fuzzy logic in insurance" INSURANCE, MATHEMATICS AND ECONOMICS, NORTH-HOLLAND, AMSTERDAM, NL, vol. 35, no. 2, 11 October 2004 (2004-10-11), pages 399-424, XP005632944 ISSN: 0167-6687

**Description**

Field of the invention

This invention relates to a game theoretic system, method and computer program for recommending a defense strategy, security alert dissemination and/or evaluation in a network subject to malicious attacks. The strategy is obtained by solving a security game between potential attackers and defenders (users) where the game takes vulnerabilities and local preferences into account. In preferred embodiments of the invention, zero sum and fuzzy security game formulations are solved to recommend network defense strategies, e.g. to system administrators who may operate under time and resource limitations. Further, the present invention can be used to improve the information flow from security experts and to combine security alerts and local information for recommending a resource allocation strategy to users.

Background of the invention

In recent years, the number of security vulnerabilities on networked systems has increased significantly. The statistics issued by CERT at Carnegie Mellon University demonstrate the magnitude of the problem faced by the security community. Each one of these vulnerabilities can be exploited by malicious attackers to compromise computer systems, and has potential financial and productivity-related consequences for businesses and organizations.

There are multiple community sources which inform and warn system administrators about recently discovered security vulnerabilities. The "@RISK: The Consensus Security Vulnerability Alert" newsletter issued weekly by the SANS (System administrator, Audit, Network, Security) Institute is one example. It summarizes the warnings that matter most, tells what damage they do and how to protect from them. Another comprehensive resource is the National Vulnerability Database (NVD), which is the U.S. government repository of standards based vulnerability management data represented using the Security Content Automation Protocol (SCAP). Since vulnerabilities are almost always system and application-dependent, each warning is not relevant to all systems. For example, in a company with only Linux-based computers the Windows-related security problems can be ignored.

US 2006/0075503 A1 relates to a graphical user interface for managing vulnerability life cycle of a computer network of an organizational entity. In US 2006/0101519 A1, a means of providing computer security vulnerability information to a plurality of organizations is suggested such that the vulnerability information provided to each organization is customized to its network environment. Further, US 2008/0022397 A1 relates to a system for managing network vulnerability and US 2007/0067846 A1 describes systems and methods for associating security vulnerabilities and assets.

Nguyen, K.C. et al, "Stochastic games for security in networks with interdependent nodes", GAME THEORY FOR NETWORKS, 2009. GAMENETS '09. INTERNATIONAL CONFERENCE, IEEE, pages 697 - 703, relates to a stochastic game theoretic approach to security and intrusion detection in communication and computer networks.

Wei, Jiang et al, "A Stochastic Game Theoretic Approach to Attack Prediction and Optimal Active Defense Strategy Decision", NETWORKING, SENSING AND CONTROL, 2008. ICNSC 2008. IEEE INTERNATIONAL CONFERENCE, pages 648 - 653, relates to a stochastic game theoretic approach to analyzing attack prediction and the active defense of computer networks.

Alpcan, T. et al, "A game theoretic approach to decision and analysis in network intrusion detection", 42ND. IEEE CONFERENCE ON DECISION AND CONTROL, DEC 2003, pages 2595 - 2600, relates to game theoretic concepts to develop a formal decision and control framework.

Alpcan, T. et al, "A game theoretic analysis of intrusion detection in access control systems", DECISION AND CONTROL, 2004. CDC. 43RD IEEE CONFERENCE, vol. 2, pages 1568 - 1573, relates to game-theoretic analysis of intrusion detection in access control systems, wherein the security game between the attacker and the intrusion detection system is investigated both in infinite and continuous-kernel versions.

Alpcan, T. et al, "An intrusion detection game with limited observations", retrieved from: http://www.tansu.alpcan.org/papers/isdg06.pdf, relates to a 2-player zero-sum stochastic (Markov) security game which models the interaction between malicious attackers to a system and the IDS who allocates system resources for detection and response.

Xia Zhengyou et al, "A kind of network security behavior model based on game theory", PARALLEL AND DISTRIBUTED COMPUTING, APPLICATIONS AND TECHNOLOGIES, PROCEEDINGS OF THE FOURTH INTERNATIONAL CONFERENCE ON AUG. 27 - 29, 2003, pages 950 - 954, relates to security interactive behavior between hacker and defenders, wherein defenders can use the Nash equilibrium point to analysis and asset their security.

Wei, Jiang et al, "Optimal Network Security Strengthening Using Attack-Defense Game Model", INFORMATION TECHNOLOGY: NEW GENERATIONS, ITNG '09. SIXTH INTERNATIONAL CONFERENCE, pages 475 - 480, relates to the assessment of security and optimal strengthening of large enterprise networks using configuration information on firewalls and vulnerability information on all network devices to build defense graphs that show the attack and defense strategy.

Peldschus et al, "Fuzzy matrix games multi-criteria model for decision-making in engineering", INFORMATICA, LITHUANIAN ACADEMY OF SCIENCE, (20050101), vol. 16, no. 1, pages 107 - 120, relates to a fuzzy matrix games multi-criteria model for decision-making in engineering using the relationship between fuzzy sets and matrix game theories for multicriteria.

Garagic, D. And Cruz Jr., J.B., "An Approach to Fuzzy Noncooperative Nash Games", JOURNAL OF OPTIMIZATION THEORY AND APPLICATIONS, 2003, vol. 118, no. 3, pages 475 - 491, relates to systems involving more than one decision-maker using fuzzy set theory in order to incorporate the players' heuristic knowledge of decision making into the framework of conventional game theory or ordinal game theory.

Shapiro et al, "Fuzzy logic in insurance", INSURANCE, MATHEMATICS AND ECONOMICS, 2004, vol. 35, no. 2, pages 399 - 424, is a review article on fuzzy logic applications in insurance industry.

In view of above, it is an object of the present invention to provide an improved system, method and computer program for recommending a defense strategy, security alert dissemination and/or evaluation in a network subject to malicious attacks. The respective strategy is obtained by defining and solving a security game between potential attackers and defenders (users) where the game takes vulnerabilities and local preferences into account. Another aspect of the present invention relates to a system, method and computer program which increases the efficiency of its users (e.g. system administrators), who may operate under time and resource limitations. A further aspect relates to improving the information flow from security experts. By combining security alerts and local information the present invention may recommend a resource allocation strategy to its users.

Summary of the invention

Game theory provides a formal mathematical framework for modeling and analysis of security-related decision processes. Such a mathematical abstraction is useful for generalization of problems, combining the existing ad hoc schemes under a single umbrella, and increased automation in defense systems.

The present invention relates to a game theoretic recommendation system, method and computer program, which computes a strategy recommendation for users, such as for example system administrator users, based on, e.g., the local network description and security alerts issued by experts. This strategy filters out irrelevant reports and focuses on local systems which may be potentially targeted as a result of discovered vulnerabilities. Hence, it recommends system administrators on how to allocate limited defense resources. At the same time, it partly automates security-related decision making. Thus, the recommendation system helps to increase productivity of security personnel and acts as a community tool by building a bridge between security researchers and system administrators. Further, it can also be developed in a commercial setting as a security service. The proposed system, method and computer program can support its users, e.g. system administrators, by recommending optimized resource allocation strategies tailored to their specific networks. Hence, it can both formalize and improve security vulnerability dissemination and evaluation processes.

In preferred embodiments of the invention, a game theoretic framework modeling attacker behavior provides an engine of the recommendation system. Each discovered vulnerability is a potential threat for the respective computing system and paves the way for malicious attacks. On the other hand, system administrators and security personnel have to allocate their limited resources efficiently in order not to become overwhelmed. Prioritization of individual devices on the network is one way of increasing efficiency. These factors are brought together in a security game which takes them as parameters and provides a quantitative method for *formal decision making.* The equilibrium solution of the game constitutes the recommended strategy to system administrators. Possible uses of the security-game approach include, for example:

- a novel game-theoretic recommendation system for security alerts bringing together security researchers and system administrators,
- a game theoretic system and method taking discovered vulnerabilities and local system properties as input parameters and computes strategy recommendations for system administrators,
- Zero-sum and fuzzy game methods used in the recommendation system for computing strategy recommendations and modeling worst-case attacker behavior.

The recommendation system and method according to the present invention may be implemented as a web application, which makes it flexible and platform-independent. For example, it can be accessed from mobile devices. Furthermore, the system preserves privacy of its users as it does not require them to reveal local system configuration. During registration, each user chooses a category and registers either as (security) expert or (system administrator) user. The experts are allowed to set warning levels on a predefined set of categories. The users (system administrators), on the other hand, enter the devices on their network along with their importance and categories. Subsequently, a strategy is computed for each user solving the security game defined above.

One aspect of the present invention relates to a method for recommending a defense strategy for managing network vulnerability, wherein the network comprises a plurality of devices, the method comprising the steps of:

- identifying the vulnerability level $v_i$ of each $i$ of said plurality of devices,
- identifying the importance level $r_i$ of each $i$ of said plurality of devices,
- estimating the damage induced on the network when at least one of the devices is being attacked by at least one attacker while at least one of the devices is being defended by at least one defender, comprising the step of evaluating said vulnerability level $v_i$ and said importance level $r_i$ of at least one of the corresponding devices $i$,
- defining a game theory security game using said estimated damage and solving the security game,
- computing a strategy which corresponds to a solution of said security game for recommending a defense strategy for managing the network vulnerability.

It is preferred that the solution of said security game is obtained by minimizing the worst-case possible damage induced on the network by the at least one attacker and corresponding to a worst-case attack strategy imposed on the network.

Preferably, the step of defining the game theory security game comprises generating an NrxNr game-matrix $|P(i,j)|$, wherein selecting the first index in the first dimension of the game matrix corresponds to selecting a device being attacked by an attacker and wherein selecting the second index in the second dimension of the game-matrix corresponds to selecting a device treated by a defender to lower its attack vulnerability. The entries $P(i,j)$ of the game-matrix $|P(i,j)|$ each preferably correspond to a payoff for an attacker attacking device $i$, while a defender is defending device $j$, wherein it is further preferred that the payoff for the attacker is equal to the corresponding cost for the defender. The entries in the game-matrix $|P(i,j)|$ may for example be scalar values and their definition may involve multiplying the vulnerability level $v_i$ and importance level $r_i$ of the corresponding device $i$.

It is further preferred that the solution of the security game is obtained by solving a two player attacker-defender security game, preferably a zero-sum security game, further preferred a zero-sum matrix security game comprising dual programming problems, wherein the players of the two player attacker-defender security game are abstract players, each comprising one or more players.

Alternatively, it is preferred that the entries of said game-matrix $|P(i,j)|$ are defined as Fuzzy-membership functions, further preferred as triangular membership functions $tri(a,b,c)$. Here, it is preferred that the solution of the security game is obtained by solving a two player attacker-defender fuzzy security game, preferably comprising a primal fuzzy linear program and a dual fuzzy linear program, wherein the players of the two player attacker-defender security game are abstract players, each comprising one or more players. The step of solving the fuzzy security game preferably comprises the step of converting the dual fuzzy linear program into a non-fuzzy dual linear program, wherein the step of conversion preferably comprises the step of ranking fuzzy numbers using defuzzification methods, such as, for example, the $\alpha$-cut or k-preference index approach.

The step of identifying the vulnerability level $v_i$ of each i of said plurality of devices according to the present invention preferably comprises the step of matching security information describing possible types of network attacks with network information describing vulnerability properties of each i of said plurality of devices, preferably by using taxonomy methods.

It is further preferred that the step of recommending a defense strategy comprises the step of recommending a security resource allocation strategy.

A further aspect of the present invention relates to a computer program performing the steps of the method described above. Another aspect of the invention relates to a digital storage medium containing such a computer program.

Yet another aspect of the present invention relates to a system performing the steps according to the method for recommending a defense strategy for managing network vulnerability described above, wherein the system comprises:

- a network description database containing information used for identifying the vulnerability level $v_i$ of each $i$ of said plurality of devices;
- a user preferences database containing information used for identifying the importance level $r_i$ of each $i$ of said plurality of devices;
- an estimation means for estimating the damage induced on the network when at least one of the devices is being attacked by at least one attacker while at least one of the devices is being defended by at least one defender, wherein the vulnerability level $v_i$ and importance level $r_i$ of at least one of the corresponding devices $i$ are evaluated;
- a game decision module for solving a game theory security game defined by using said estimated damage and for computing a defense strategy corresponding to the solution of said security game to recommend a defense strategy.

It is further preferred that the game decision module comprises a fuzzy logic module for defining said game theory security game.

It is also preferred that the system according to the present invention further comprises a vulnerability database containing said security information describing possible types of network attacks and/or a matching means for matching such security information with network description contained in said network description database and describing vulnerability properties of each i of said plurality of devices. The matching means is preferably a taxonomy engine. Here, the system preferably comprises a web interface for providing a remote expert access to the vulnerability database and/or a web interface for providing a remote user access to the network description database and/or the user preferences database. The system preferably further comprises an access control means for selectively providing remote user access.

Brief description of the drawings

Preferred embodiments of the invention are described in more detail below with reference to the attached drawings, which are by way of example only. It is shown in

Fig. 1    a triangular membership function tri(a,b,c),
Fig. 2    an equilibrium strategy of the zero sum game,
Fig. 3    a recommendation for allocation of defense resources to individual devices,
Fig. 4    equilibrium defense strategies of the zero sum and fuzzy games,
Fig. 5    fuzzy defense strategies for different values of the $\alpha$-cut parameter,
Fig. 6    an edit device form for users where they can enter properties of individual devices on their network.
Fig. 7    a representation of the game theoretic recommendation system with inputs and outputs,
Fig. 8    a representation of the game theoretic recommendation system architecture along with the zero-sum game method,
Fig. 9    a representation of the game theoretic recommendation system with the alternative fuzzy game method.

Detailed description of preferred embodiments

This section describes preferred embodiments of the present invention, wherein a zero-sum and fuzzy game are solved to obtain the recommendations based on the amount and certainty of information available to the decision making user.

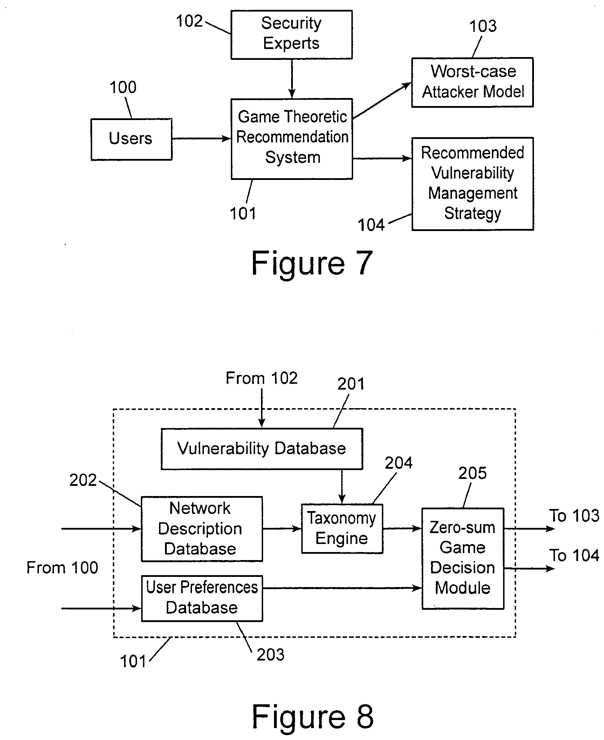

Fig. 7 depicts a preferred embodiment of the game theoretic recommendation system. The registered users 100 of the system may for example be system administrators or security officers of a network in an enterprise or organization. The security experts 102 provide a description of discovered vulnerabilities to the system 101. Both users 100 and experts 102 communicate with the system 101 through a web-based user interface. Utilizing various game theoretic methods the system 101 outputs a worst-case attacker model 103 for the benefit of users and a recommended vulnerability management strategy 104, which helps users deciding how to prioritize their vulnerability management tasks such as patch management.

Fig. 8 depicts further details of the game theoretic recommendation system 101 methods and architecture. The input from security experts 101 is processed and stored in a vulnerability database 201. Also, and possibly at the same time, the individual network descriptions from users 100 are processed and stored in network description database 202. The users also provide their preferences, which are stored in the user preferences database 203. The network descriptions and vulnerabilities from respective databases 202 and 201 are matched with each other in the taxonomy engine 204. The output of the taxonomy engine 204 along with user preferences from the user preferences database 203 are the inputs to the zero-sum game decision module 205, which outputs a worst-case attacker model 103 and a recommended vulnerability management strategy 104.

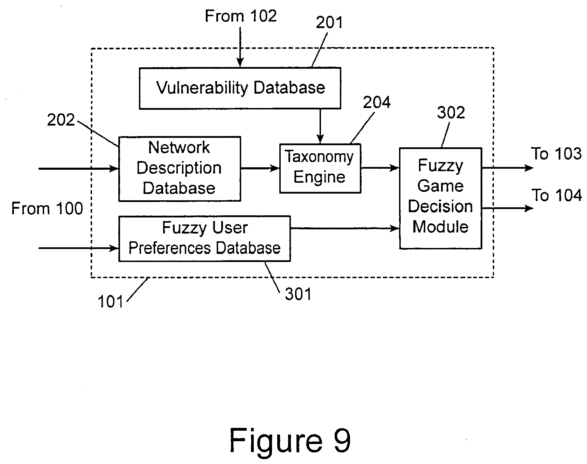

Fig. 9 depicts an alternative preferred embodiment of the game theoretic recommendation system 101 with an alternative fuzzy game method. In this case, the users provide fuzzy preferences instead of numerical, which are processed and stored at the fuzzy user preferences database 301. Output of the user preferences database 301 along with the one of taxonomy engine 204 provides the input to the fuzzy game decision module 302, which replaces the decision module 205. Again, a worst-case attacker model 103 and a recommended vulnerability management strategy 104 are the outputs of the alternative fuzzy game decision module 302.

The respective game theoretic security game according to the preferred embodiments models the interaction between attackers and defenders (system administrators) by taking into account the threat posed by discovered vulnerabilities and the priorities of the system administrators. For example, the specific security game may be a finite, 2-player (attacker vs. defender) and zero-sum (in terms of cost structure) security game. The action space of the players is the set of devices that can be potentially targeted by attackers and protected by the defenders. The outcome of the game may, for example, be determined by the game matrix $P$, which contains the cost (payoff) values for each possible action-reaction combination.

Here, in a preferred embodiment, the game matrix, $P$, maps player actions (attacks exploiting vulnerabilities and defensive/preventive actions such as patching or reconfiguration) to outcomes, i.e. payoff and cost for the attacker and defender, respectively. The diagonal entries of the matrix are zero based on the assumption that if a system administrator (defender) patches or reconfigures a vulnerability of a device, the attacker cannot harm that device anymore. The remaining entries of the game matrix are a function of the importance of each device and the vulnerability of the respective device category. In this preferred embodiment, the function is chosen to be bi-linear, i.e. the vulnerability and preference values of the device is multiplied with each other to determine the outcome. Alternative formulations are -of course- possible. Below, the convention is adopted where the attacker is the row player (maximizer) and the defender is the column player (minimizer). Accordingly, the game matrix, $P$ is defined as

$$P = [P(i,j)] := \begin{cases} v_i \, r_i, \text{ if } i \neq j \\ 0, \text{ if } i = j, \quad \forall i, j \in \mathcal{D} \end{cases} \qquad (1)$$

where $v$ denotes the vulnerability level of a device and $r$ the importance attached to the device by the system administrator. In this example, both vulnerability and importance values are represented by five levels {very low, low, medium, high, very high} and quantified by $v, r \in \{1, 2, 3, 4, 5\}$. The vulnerability level of a device is chosen to be the maximum value of the vulnerabilities of categories it belongs to.

A further preferred embodiment of the present invention relates to a zero-sum security game, wherein the game matrix (cost and payoffs) are assumed to be known to both the defender and the attacker. Since the game is defined as zero-sum, the attacker's gain is equal to the defender's loss, and vice verse. The zero-sum game has the matrix defined in (1) and follows the conventions described above, e.g. the attacker is the maximizer (row player) and the defender is the minimize (column player) of the game.

The described two player zero-sum matrix game admits a solution in mixed strategies and the solution (saddle point) can be obtained by solving the following pair of primal-dual linear programming problems:

$$\max_{x} \quad h$$
$$s.t. \quad \sum_{i} P(i,j) x_i \geq h, \quad \forall j \qquad (2)$$
$$\sum_{i} x_i = 1, x_i \geq 0, \quad \forall i$$

and

$$\min_{y} \quad w$$
$$s.t. \quad \sum_{j} P(i,j) y_j \geq w, \quad \forall i \qquad (3)$$
$$\sum_{j} y_j = 1, y_j \geq 0, \quad \forall j$$

Since both problems are feasible and mutually dual, by duality theory, the maximum of $h$ will be equal to the minimum of $w$. Hence, the value $h=w$ is the *value* of the game, which corresponds to the equilibrium (saddle point) gain and loss for the attacker and defender, respectively. Here, the vector $x$ is the equilibrium strategy of the attacker which can also be interpreted as expected attack probabilities. The vector $y$ is the recommended defense strategy. Its entries are mapped to the set {very low, low, medium, high, very high}. The result is then used as a guideline to decide where to allocate limited defense resources.

In an alternative preferred embodiment of the invention, the players in the game may, for example, have more limited information about the preferences of their opponents. If payoffs in a game are known or expressed only approximately, then *fuzzy numbers* can be used in the game matrix instead of precise (or crisp) ones. This results in a *fuzzy game* where players attempt to maximize their own utility despite having only access to an imprecise game (payoff) matrix.

Fuzzy numbers can express an approximation and a tolerance for deviation from the true value. The assumption of full and exact information does not hold in complex problems partly due to difficulty of defining an adequate payoff value for each player. With fuzzy set theory, the players can express their preferences heuristically and approximately. This can be useful for interaction with people, as it provides a way for them to communicate their estimations in vague terms. Another benefit of fuzzy games is that fuzzy linear programming often used in solving them may save time in comparison to conduct a full Monte Carlo analysis on the parameter space of the game.

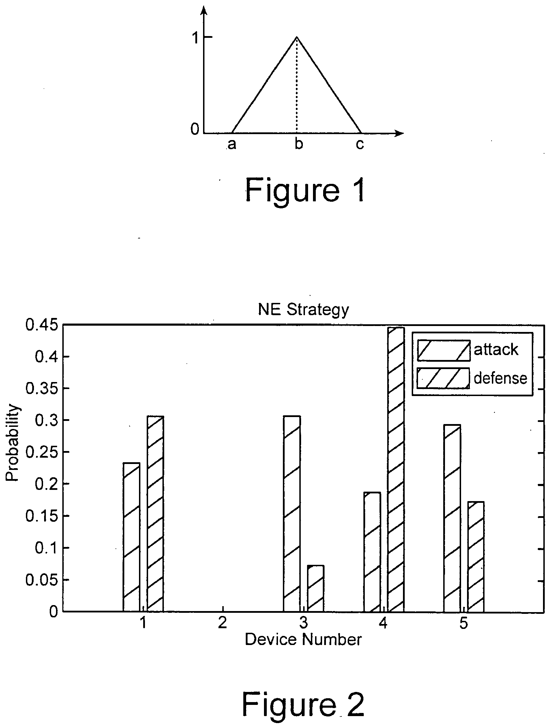

The fuzzy numbers in the game matrix of a fuzzy game are defined through membership functions instead of single precise values. At a given point, the value of the membership function represents the membership degree of that point to the respective fuzzy set. In this example implementation, triangular membership functions, *tri(a,b,c)* as defined in Fig. 1, are chosen to describe fuzzy payoffs. Then, without loss of generality, an example fuzzy game matrix $P_f$ is defined as:

$$P_f := \begin{cases} tri(a,b,c), \text{ if } i \neq j, \text{ s.t.} \\ \quad a = v_i r_i - 1, \ b = v_i r_i, \ c = v_i r_i + 1 \\ tri(-2,0,3), \text{ if } i = j, \ \forall i,j \in \mathcal{D} \end{cases} \quad (4)$$

Here the entries express a$\pm$1 fuzziness around the crisp values defined in (1).

The fuzzy game defined can, for example, be solved using the following fuzzy linear programming approach. Here, the primal and dual fuzzy linear programs, which are roughly the fuzzy counterparts of the ones in (2) and (3), are:

$$\min_{u,\alpha} \quad \sum_i u_i$$

$$\text{s.t.} \quad \sum_i P(i,j)u_i \succeq 1 - \tilde{p}(1-\alpha), \ \forall j \in \mathcal{N}_r$$
$$u_i \geq 0, \ \forall i \in \mathcal{N}_r, \ \alpha \in (0,1], \quad (5)$$

and

$$\max_{s,\alpha} \quad \sum_j s_j$$

$$\text{s.t.} \quad \sum_j P(i,j)s_j \preceq 1 + \tilde{q}(1-\alpha), \ \forall i \in \mathcal{N}_r$$
$$s_j \geq 0, \ \forall j \in \mathcal{N}_r, \ \alpha \in (0,1], \quad (6)$$

where the fuzzy numbers p~ and q~, express the tolerance levels of players regarding violations of the constraints, and script inequality signs denote relations for ranking fuzzy numbers. The tolerance levels p~ and q~ are chosen as *tri*(0.20,0.30,0.50) corresponding to approximately %30 tolerance.

In addition, the following relationships hold for the solution:

$$h = \frac{1}{\sum_i u_i}, \quad w = \frac{1}{\sum_j s_j}$$

and

$$x_i = u_i h, \quad y_j = s_j w$$

where *u, w, x,* and *y* are defined in a similar way to the classical case (2) and (3). However, unlike the classical zero-sum game formulation in Section "Zero-Sum Security Game", the (Nash equilibrium) value of the game may not necessarily match, i.e. $h \neq w$.

There are many alternative methods of defuzzification to rank fuzzy numbers, turn, into regular inequalities, and hence converting the fuzzy linear program to a classical one. In this example implementation, we choose without loss of any generality, the $\alpha$-cut or k-preference index approach defined as

$$F_k(\tilde{a}) := \max\{x : \mu_{\tilde{a}} \geq k\},$$

for a given level $\alpha$ or $k \in [0.1]$, where $\mu_{\tilde{a}}$ is the membership value of the fuzzy number a. After the defuzzification, the resulting regular linear and dual linear programs are solved with standard methods.

Figures 2, 3, 4 and 5 show results obtained by solving the above-described zero sum and fuzzy game formulations for a network scenario with five devices. The game specific game matrix $P$ in (1) is defined as

$$P = \begin{bmatrix} 0 & 12 & 12 & 12 & 12 \\ 2 & 0 & 2 & 2 & 2 \\ 9 & 9 & 0 & 9 & 9 \\ 15 & 15 & 15 & 0 & 15 \\ 10 & 10 & 10 & 10 & 0 \end{bmatrix}$$

and the corresponding fuzzy game matrix $P_f$ is accordingly defined in equation (4) above. In this case, the devices have the vulnerability levels (3,1,3,3,5) and priorities (4,2,3,5,2). The fourth device has medium level potential vulnerability but has a significant role in the network, e.g. an important server, whereas the fifth one has a very high level vulnerability but is not prioritized.

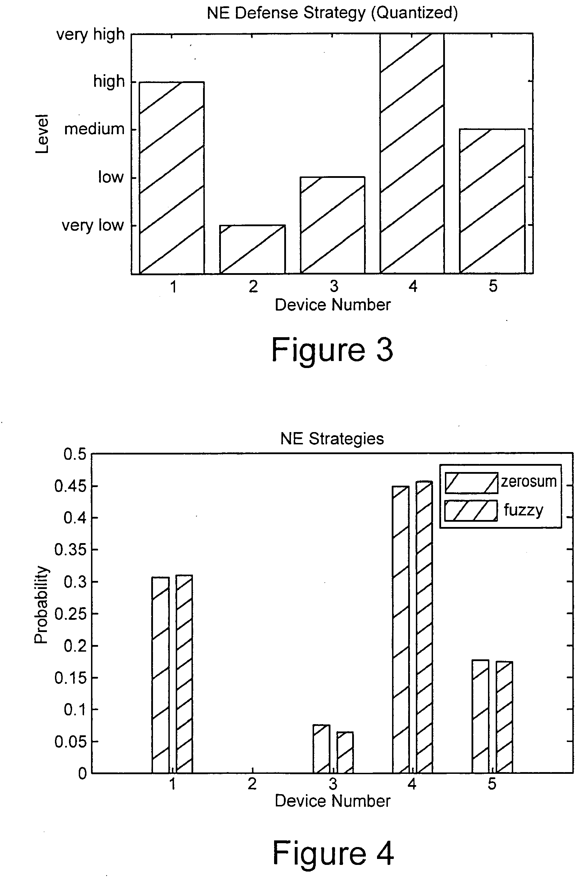

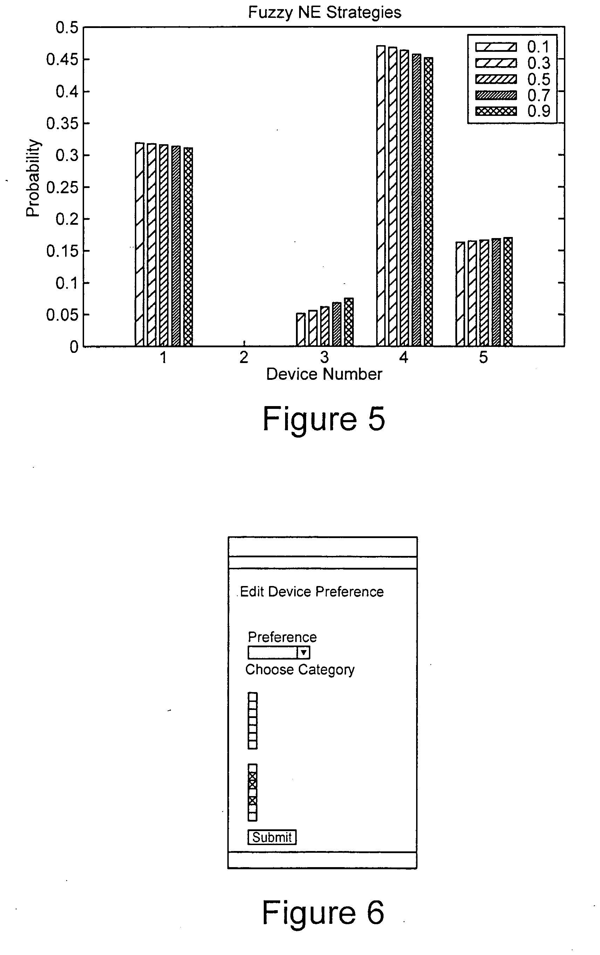

As part of the numerical analysis, first the equilibrium strategies for the attacker and the defense obtained by solving the zero sum game are shown in Fig. 2. Next, Fig. 3 depicts the resulting recommendation computed by quantizing the defense strategy. Then, the equilibrium defense strategy is computed for the fuzzy game. The outcome of the fuzzy game is quite similar to the one of the zero sum game as shown in Fig. 4. Finally, the effect of the $\alpha$-cut parameter on the fuzzy game results is investigated and shown to be quite limited in Fig. 5.

It is observed that the outcomes of fuzzy and zero sum games are very similar to each other for the specific game defined especially after quantization. This, along with additional experiments, indicates that the game theoretic formulation adopted according to the present invention exhibits a certain degree of robustness with respect to game parameters. This is desirable considering that both users and experts may express their preferences and vulnerability levels with limited precision.

A preferred embodiment of a system according to the present invention considers two types of participants: (security) experts and (system administrator) users. Given a categorization the security experts enter the vulnerability levels for each device category based on the most recent information. Each system administrator user, on the other hand, enters the system description along with own preferences. Subsequently, the system computes the recommended strategy for each user separately using the zero sum game formulation described above and displays the result. A further preferred embodiment is implemented as a platform-independent web application to improve its flexibility and may for example enable access from mobile devices. Fig. 6 shows an example of an edit device form for users where they can enter properties of individual devices on their network. As the programming language, *Python* can be chosen for its efficiency and library support. The web application server may, for example, be realized using the *TurboGears* web framework which allows for rapid application development. Optimization libraries, such as for example *cvxopt,* can be used in solving linear programs associated with the zero sum games.

This preferred embodiment adopts a *security service* approach possibly as a paid service, where users register to a remote system and receive recommendations from experts based on recently discovered vulnerabilities. The privacy of the users are protected as the experts do not see details of individual users. Instead, a device categorization maps vulnerabilities discovered by experts to individual user networks. This can be taken a step further and an alternative open community approach can be adopted. Then, the system can be deployed locally in a single user scheme and receive vulnerability information from a central repository which gets updated by voluntary security experts in the community.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems defined in the claims.

**Claims**

1. A computer implemented method for recommending a defense strategy for managing network vulnerability, wherein the network comprises a plurality of devices, the method comprising the steps of:

   - identifying the vulnerability level $v_i$ of each $i$ of said plurality of devices,
   - identifying the importance level $r_i$ of each $i$ of said plurality of devices,
   - estimating the damage induced on the network when at least one of the devices is being attacked by at least one attacker while at least one of the devices is being defended by at least one defender, comprising the step of evaluating said vulnerability level $v_i$ and said importance level $r_i$ of at least one of the corresponding devices $i$,
   - defining a game theory security game using said estimated damage and solving the security game,
   - computing a strategy which corresponds to a solution of said security game for recommending a defense strategy for managing the network vulnerability,
   - wherein said step of defining the game theory security game, comprises the step of generating an Nr×Nr game-matrix $|P(i,j)|$, wherein selecting the first index in the first dimension of the game matrix corresponds to selecting a device being attacked by an attacker and wherein selecting the second index in the second dimension of the game-matrix corresponds to selecting a device treated by a defender to lower its attack vulnerability,
   - wherein said solution of the security game is obtained by solving a two player attacker-defender security game, wherein the players of the two player attacker-defender security game are abstract players, each comprising one or more players,
   - wherein the entries of said game-matrix $|P(i,j)|$ are defined as Fuzzy-membership functions,
   - wherein the vulnerability and importance values are represented by five levels and quantified by $v,r \in \{1,2,3,4,5\}$ and wherein the vulnerability level of a device is chosen to be the maximum value of the vulnerabilities of categories it belongs to.

2. The method according to claim 1, wherein the solution of said security game is obtained by minimizing the worst-case possible damage induced on the network by the at least one attacker and corresponding to a worst-case attack strategy imposed on the network.

3. The method according to claim 1 or 2, wherein the entries $P(i,j)$ of the game-matrix $|P(i,j)|$ each correspond to a payoff for an attacker attacking device $i$, while a defender is defending device $j$, wherein preferably the payoff for the attacker is equal to the corresponding cost for the defender.

4. The method according to any one of claims 1 to 3, wherein generating said game-matrix $|P(i,j)|$ comprises the step of multiplying the vulnerability level $v_i$ and importance level $r_i$ of the device $i$.

5. The method according to any one of claims 1 to 4, wherein the entries of said game-matrix $|P(i,j)|$ are scalar values.

6. The method of any of the preceding claims, wherein said solution of the security game is obtained by solving a zero sum security game, further preferred a zero sum matrix security game comprising dual programming problems.

7. The method of any of the preceding claims, wherein the entries of said game matrix $|P(i,j)|$ are defined as triangular membership functions *tri(a,b,c)*.

8. The method according to any of claims 1 to 7, wherein said solution of the security game is obtained by solving a two player attacker-defender fuzzy security game, preferably comprising a primal fuzzy linear program and a dual fuzzy linear program, wherein the players of the two player attacker-defender security game are abstract players, each comprising one or more players.

9. The method according to claim 8, wherein the step of solving the fuzzy security game comprises the step of converting the dual fuzzy linear program into a non-fuzzy dual linear program, wherein the step of conversion preferably comprises the step of ranking fuzzy numbers using defuzzification methods, wherein preferably the defuzzification method is the $\alpha$-cut or k-preference index approach.

10. The method according to any of the preceding claims, wherein the step of identifying the vulnerability level $v_i$ of each $i$ of said plurality of devices comprises the step of matching security information describing possible types of network attacks with network information describing vulnerability properties of each $i$ of said plurality of devices, preferably by using taxonomy methods.

**11.** The method according to any of the preceding claims, wherein said step of recommending a defense strategy comprises the step of recommending a security resource allocation strategy.

**12.** A computer program performing the steps of the method according to any of the preceding claims.

**13.** A digital storage medium containing the computer program of claim 12.

**14.** A system performing the steps according to any of the method claims 1 to 11, comprising:

- a network description database (202) containing information used for identifying the vulnerability level $v_i$ of each $i$ of said plurality of devices;
- a user preferences database (203) containing information used for identifying the importance level $r_i$ of each $i$ of said plurality of devices;
- an estimation means for estimating the damage induced on the network when at least one of the devices is being attacked by at least one attacker while at least one of the devices is being defended by at least one defender, wherein the vulnerability level $v_i$ and importance level $r_i$ of at least one of the corresponding devices i are evaluated;
- a game decision module (205, 302) for solving a game theory security game defined by using said estimated damage and for computing a defense strategy corresponding to the solution of said security game to recommend a defense strategy,
- wherein said step of defining the game theory security game, comprises the step of generating an Nr×Nr game-matrix |P($i,j$)|, wherein selecting the first index in the first dimension of the game matrix corresponds to selecting a device being attacked by an attacker and wherein selecting the second index in the second dimension of the game-matrix corresponds to selecting a device treated by a defender to lower its attack vulnerability,
- wherein said solution of the security game is obtained by solving a two player attacker-defender security game, wherein the players of the two player attacker-defender security game are abstract players, each comprising one or more players,
- wherein the entries of said game-matrix |P($i,j$)| are defined as Fuzzy-membership functions,
- wherein the vulnerability and importance values are represented by five levels and quantified by $v,r \in \{1,2,3,4,5\}$ and wherein the vulnerability level of a device is chosen to be the maximum value of the vulnerabilities of categories it belongs to.

**15.** The system according to claim 14, wherein the game decision module comprises a fuzzy logic module (302) for defining said game theory security game.

**16.** The system according to claim 14 or 15, further comprising a matching means matching security information describing possible types of network attacks with network description contained in said network description database (202) and describing vulnerability properties of each i of said plurality of devices, wherein preferably the matching means is a taxonomy engine (204) and/or preferably further comprising a vulnerability database (201) containing said security information describing possible types of network attacks and/or a web interface for providing a remote expert access to the vulnerability database (201).

**17.** The system according to any of claims 14 to 16, further comprising a web interface for providing a remote user access to the network description database (202) and/or the user preferences database and preferably further comprising an access control means for selectively providing remote user access.

**Patentansprüche**

**1.** Computerimplementiertes Verfahren zum Empfehlen einer Verteidigungsstrategie zur Verwaltung der Netzwerkverwundbarkeit, wobei das Netzwerk mehrere Vorrichtungen aufweist, wobei das Verfahren folgende Schritte aufweist:

- Identifizieren des Verwundbarkeitsniveaus $v_i$ von jeder $i$ der mehreren Vorrichtungen,
- Identifizieren des Wichtigkeitsniveaus $r_i$ von jeder $i$ der mehreren Vorrichtungen,
- Schätzen des Schadens, der am Netzwerk induziert wird, wenn wenigstens eine der Vorrichtungen durch wenigstens einen Angreifer angegriffen wird, während wenigstens eine der Vorrichtungen durch wenigstens einen Verteidiger verteidigt wird, mit dem Schritt des Beurteilens des Verwundbarkeitsniveaus $v_i$ und des Wich-

tigkeitsniveaus $r_i$ wenigstens einer der entsprechenden Vorrichtungen $i$,
- Definieren eines Spieltheoriesicherheitsspiels unter Verwendung des geschätzten Schadens und Lösen des Sicherheitsspiels,
- Berechnen einer Strategie, die einer Lösung des Sicherheitsspiels entspricht, zum Empfehlen einer Verteidigungsstrategie zur Verwaltung der Netzwerkverwundbarkeit,
- wobei der Schritt des Definierens des Spieltheoriesicherheitsspiels den Schritt des Erzeugens einer NrxNr-Spielmatrix $|P(i,j)|$ aufweist, wobei das Auswählen des ersten Index in der ersten Dimension der Spielmatrix dem Auswählen einer Vorrichtung entspricht, die von einem Angreifer angegriffen wird, und wobei das Auswählen des zweiten Index in der zweiten Dimension der Spielmatrix dem Auswählen einer Vorrichtung entspricht, die von einem Verteidiger behandelt wird, um ihre Angriffsverwundbarkeit zu verringern,
- wobei die Lösung des Sicherheitsspiels durch Lösen eines Zwei-Spieler-Angreifer-Verteidiger-Sicherheitsspiels erhalten wird, wobei die Spieler des Zwei-Spieler-Angreifer-Verteidiger-Sicherheitsspiels abstrakte Spieler sind, die jeweils einen oder mehrere Spieler umfassen,
- wobei die Einträge der Spielmatrix $|P(i,j)|$ als Fuzzy-Zugehörigkeitsfunktionen definiert sind,
- wobei die Verwundbarkeits- und Wichtigkeitswerte durch fünf Niveaus repräsentiert werden und durch $v, r \in \{1,2,3,4,5\}$ quantifiziert werden und wobei das Verwundbarkeitsniveau in der Vorrichtung als der Maximalwert der Verwundbarkeiten der Kategorien, zu der sie gehört, gewählt wird.

2. Verfahren nach Anspruch 1, wobei die Lösung des Sicherheitsspiels erhalten wird, indem der im schlimmsten Fall mögliche Schaden, der am Netzwerk durch den wenigstens einen Angreifer herbeigeführt wird, entsprechend einer Schlimmster-Fall-Angriffsstrategie, die dem Netzwerk auferlegt wird, minimiert wird.

3. Verfahren nach Anspruch 1 oder 2, wobei die Einträge $P(i,j)$ der Spielmatrix $|P(i,j)|$ jeweils einem Ergebnisbetrag für einen die Vorrichtung $i$ angreifenden Angreifer entsprechen, während ein Verteidiger die Vorrichtung $j$ verteidigt, wobei der Ergebnisbetrag für den Angreifer vorzugsweise gleich den entsprechenden Kosten für den Verteidiger ist.

4. Verfahren nach einem der Ansprüche 1 bis 3, wobei das Erzeugen der Spielmatrix $|P(i,j)|$ den Schritt des Multiplizierens der Verwundbarkeitsniveaus $v_i$ und des Wichtigkeitsniveaus $r_i$ der Vorrichtung $i$ aufweist.

5. Verfahren nach einem der Ansprüche 1 bis 4, wobei die Einträge der Spielmatrix $|P(i,j)|$ skalare Werte sind.

6. Verfahren nach einem der vorhergehenden Ansprüche, wobei die Lösung des Sicherheitsspiels durch Lösen eines Nullsummensicherheitsspiels erhalten wird, noch bevorzugter eines Nullsummenmatrixsicherheitsspiels, das duale Programmierprobleme aufweist.

7. Verfahren nach einem der vorhergehenden Ansprüche, wobei die Einträge der Spielmatrix $|P(i,j)|$ als trianguläre Zugehörigkeitsfunktionen $tri(a, b, c)$ definiert werden.

8. Verfahren nach einem der Ansprüche 1 bis 7, wobei die Lösung des Sicherheitsspiels durch Lösen eines Zwei-Spieler-Angreifer-Verteidiger-Fuzzysicherheitsspiels erhalten wird, das vorzugsweise ein primales Fuzzy-Linearprogramm und ein duales Fuzzy-Linearprogramm aufweist, wobei die Spieler des Zwei-Spieler-Angreifer-Verteidiger-Sicherheitsspiels abstrakte Spieler sind, die jeweils einen oder mehrere Spieler umfassen.

9. Verfahren nach Anspruch 8, wobei der Schritt des Lösens des Fuzzysicherheitsspiels den Schritt des Umwandelns des dualen Fuzzy-Linearprogramms in ein Nicht-Fuzzy-duales-Linearprogramm aufweist, wobei der Umwandlungsschritt vorzugsweise den Schritt der Rangunterteilung von Fuzzy-Zahlen unter Verwendung von Defuzzifizierungsverfahren aufweist, wobei das Defuzzifizierungsverfahren vorzugsweise ein $\alpha$-Schnitt- oder ein k-Präferenz-Indexansatz ist.

10. Verfahren nach einem der vorhergehenden Ansprüche, wobei der Schritt des Identifizierens des Verwundbarkeitsniveaus $v_i$ von jeder $i$ der mehreren Vorrichtungen den Schritt des Vergleichens von Sicherheitsinformationen, welche mögliche Typen von Netzwerkangriffen beschreiben, mit Netzwerkinformationen, welche Verwundbarkeitseigenschaften jeder i der mehreren Vorrichtungen beschreiben, vorzugsweise unter Verwendung von Taxonomieverfahren, aufweist.

11. Verfahren nach einem der vorhergehenden Ansprüche, wobei der Schritt des Empfehlens einer Verteidigungsstrategie den Schritt des Empfehlens einer Sicherheitsressourcenzuweisungsstrategie aufweist.

**12.** Computerprogramm, das die Schritte des Verfahrens nach einem der vorhergehenden Ansprüche ausführt.

**13.** Digitales Speichermedium, welches das Computerprogramm nach Anspruch 12 enthält.

**14.** System, das die Schritte nach einem der Verfahrensansprüche 1 bis 11 ausführt, welches Folgendes aufweist:

- eine Netzwerkbeschreibungsdatenbank (202), die Informationen enthält, die zum Identifizieren des Verwundbarkeitsniveaus $v_i$ jeder $i$ der mehreren Vorrichtungen verwendet werden,
- eine Benutzerpräferenzendatenbank (203), die Informationen enthält, die zum Identifizieren des Wichtigkeitsniveaus $r_i$ von jeder $i$ der mehreren Vorrichtungen verwendet werden,
- eine Schätzeinrichtung zum Schätzen des am Netzwerk herbeigeführten Schadens, wenn wenigstens eine der Vorrichtungen durch wenigstens einen Angreifer angegriffen wird, während wenigstens eine der Vorrichtungen durch wenigstens einen Verteidiger verteidigt wird, wobei das Verwundbarkeitsniveau $v_i$ und das Wichtigkeitsniveau $r_j$ wenigstens einer der entsprechenden Vorrichtungen $i$ beurteilt werden,
- ein Spielentscheidungsmodul (205, 302) zum Lösen eines Spieltheoriesicherheitsspiels, das durch die Verwendung des geschätzten Schadens definiert ist, und zum Berechnen einer Verteidigungsstrategie, die der Lösung des Sicherheitsspiels entspricht, um eine Verteidigungsstrategie vorzuschlagen,
- wobei der Schritt des Definierens des Spieltheoriesicherheitsspiels den Schritt des Erzeugens einer NrxNr-Spielmatrix $|P(i,j)|$ aufweist, wobei das Auswählen des ersten Index in der ersten Dimension der Spielmatrix dem Auswählen einer Vorrichtung entspricht, die von einem Angreifer angegriffen wird, und wobei das Auswählen des zweiten Index in der zweiten Dimension der Spielmatrix dem Auswählen einer Vorrichtung entspricht, die von einem Verteidiger behandelt wird, um ihre Angriffsverwundbarkeit zu verringern,
- wobei die Lösung des Sicherheitsspiels durch Lösen eines Zwei-Spieler-Angreifer-Verteidiger-Sicherheitsspiels erhalten wird, wobei die Spieler des Zwei-Spieler-Angreifer-Verteidiger-Sicherheitsspiels abstrakte Spieler sind, die jeweils einen oder mehrere Spieler umfassen,
- wobei die Einträge der Spielmatrix $|P(i,j)|$ als Fuzzy-Zugehörigkeitsfunktionen definiert sind,
- wobei die Verwundbarkeits- und Wichtigkeitswerte durch fünf Niveaus repräsentiert werden und durch $v, r \in \{1,2,3,4,5\}$ quantifiziert werden und wobei das Verwundbarkeitsniveau in der Vorrichtung als der Maximalwert der Verwundbarkeiten der Kategorien, zu der sie gehört, gewählt wird.

**15.** System nach Anspruch 14, wobei das Spielentscheidungsmodul ein Fuzzy-Logik-Modul (302) zum Definieren des Spieltheoriesicherheitsspiels aufweist.

**16.** System nach Anspruch 14 oder 15, welches ferner eine Vergleichseinrichtung aufweist, welche Sicherheitsinformationen, die mögliche Typen von Netzwerkangriffen beschreiben, mit der in der Netzwerkbeschreibungsdatenbank (202) enthaltenen Netzwerkbeschreibung, welche Verwundbarkeitswahrscheinlichkeiten jeder i der mehreren Vorrichtungen beschreibt, vergleicht, wobei die Vergleichseinrichtung vorzugsweise eine Taxonomiemaschine (204) ist, und/oder vorzugsweise ferner eine Verwundbarkeitsdatenbank (201), welche die Sicherheitsinformationen enthält, welche mögliche Typen von Netzwerkangriffen beschreiben, und/oder eine Webschnittstelle zum Bereitstellen eines Fernexpertenzugriffs auf die Verwundbarkeitsdatenbank (201) aufweist.

**17.** System nach einem der Ansprüche 14 bis 16, welches ferner eine Webschnittstelle zum Bereitstellen eines Fernbenutzerzugriffs auf die Netzwerkbeschreibungsdatenbank (202) und/oder die Benutzerpräferenzendatenbank aufweist und vorzugsweise ferner eine Zugriffssteuereinrichtung zum selektiven Bereitstellen eines Fernbenutzerzugriffs aufweist.

**Revendications**

**1.** Procédé assisté par ordinateur pour la recommandation d'une stratégie de défense pour la gestion de vulnérabilité d'un réseau, ledit réseau comprenant une pluralité de dispositifs, ledit procédé comprenant les étapes suivantes :

- identification du niveau de vulnérabilité $v_i$ de chaque dispositif $i$ de la pluralité de dispositifs,
- identification du niveau d'importance $r_i$ de chaque dispositif $i$ de la pluralité de dispositifs,
- estimation du dommage provoqué sur le réseau quand au moins un des dispositifs est attaqué par au moins un agresseur, au moins un des dispositifs étant défendu par au moins un défenseur, comprenant l'étape d'évaluation du niveau de vulnérabilité $v_i$ et du niveau d'importance $r_i$ d'au moins un des dispositifs $i$ correspondants,
- définition d'un jeu de sécurité en théorie des jeux sur la base du dommage estimé et résolution du jeu de sécurité,

- calcul d'une stratégie correspondant à une solution du jeu de sécurité pour la recommandation d'une stratégie de défense pour la gestion de vulnérabilité du réseau, l'étape de définition du jeu de sécurité en théorie des jeux comprenant l'étape de génération d'une matrice de jeu NrxNr |P($i,j$)|, la sélection du premier indice dans la première dimension de la matrice de jeu correspondant à la sélection d'un dispositif attaqué par un agresseur, et la sélection du deuxième indice dans la deuxième dimension de la matrice de jeu correspondant à la sélection d'un dispositif traité par un défenseur pour diminuer sa vulnérabilité à l'attaque,

- la solution du jeu de sécurité étant obtenue par résolution d'un jeu de sécurité agresseur-défenseur à deux joueurs, les joueurs dudit jeu de sécurité agresseur-défenseur à deux joueurs étant des joueurs abstraits comprenant chacun un ou plusieurs joueurs, les entrées de la matrice de jeu |P($i,j$)| étant définies comme fonctions d'appartenance floues,

- les valeurs de vulnérabilité et d'importance étant représentées par cinq niveaux et quantifiées par $v,r \in \{1,2,3,4,5\}$ et le niveau de vulnérabilité d'un dispositif étant sélectionné pour être la valeur maximale des vulnérabilités des catégories auxquelles il appartient.

2. Procédé selon la revendication 1, où la solution du jeu de sécurité est obtenue par minimisation du dommage le plus grave possible provoqué sur le réseau par ledit au moins un agresseur et correspondant à la pire stratégie d'attaque imposée sur le réseau.

3. Procédé selon la revendication 1 ou la revendication 2, où les entrées $P(i,j)$ de la matrice de jeu |P($i,j$)| correspondent chacune à un gain pour un agresseur attaquant le dispositif $i,$ un défenseur défendant le dispositif $j$, le gain pour l'agresseur étant préférentiellement égal au coût correspondant pour le défenseur.

4. Procédé selon l'une des revendications 1 à 3, où la génération de la matrice de jeu NrxNr |P($i,j$)| comprend l'étape de multiplication du niveau de vulnérabilité $v_i$ et du niveau d'importance $r_i$ du dispositif $i$.

5. Procédé selon l'une des revendications 1 à 4, où les entrées de la matrice de jeu |P($i,j$)| sont des valeurs scalaires.

6. Procédé selon l'une des revendications précédentes, où la solution du jeu de sécurité est obtenue par résolution d'un jeu de sécurité à somme nulle, préférentiellement d'un jeu de sécurité à matrice à somme nulle comprenant des problèmes de double programmation.

7. Procédé selon l'une des revendications précédentes, où les entrées de la matrice de jeu |P($i,j$)| sont définies comme fonctions d'appartenance triangulaires *tri(a,b,c)*.

8. Procédé selon l'une des revendications 1 à 7, où la solution du jeu de sécurité est obtenue par résolution d'un jeu de sécurité flou agresseur-défenseur à deux joueurs, comprenant préférentiellement un programme linéaire flou primal et un programme linéaire flou double, les joueurs du jeu de sécurité agresseur-défenseur à deux joueurs étant des joueurs abstraits comprenant chacun un ou plusieurs joueurs.

9. Procédé selon la revendication 8, où l'étape de résolution du jeu de sécurité flou comprend l'étape de conversion du programme linéaire flou double en un programme linéaire non flou double, ladite étape de conversion comprenant préférentiellement l'étape de classement de nombres flous au moyen de procédés de défuzzification, le procédé de défuzzification étant préférentiellement l'approche indicielle à coupe $\alpha$ ou à préférence k.

10. Procédé selon l'une des revendications précédentes, où l'étape d'identification du niveau de vulnérabilité $v_i$ de chaque dispositif $i$ de la pluralité de dispositifs comprend l'étape de mise en correspondance d'informations de sécurité décrivant des types d'attaques possibles sur le réseau avec des informations de réseau décrivant des propriétés de vulnérabilité de chaque dispositif $i$ de la pluralité de dispositifs, préférentiellement au moyen de procédés taxonomiques.

11. Procédé selon l'une des revendications précédentes, où l'étape de recommandation d'une stratégie de défense comprend l'étape de recommandation d'une stratégie d'allocation de ressources de sécurité.

12. Programme informatique exécutant les étapes du procédé selon l'une des revendications précédentes.

13. Support de stockage numérique contenant le programme informatique selon la revendication 12.

14. Système exécutant les étapes selon l'une des revendications de procédé 1 à 11, comprenant :

- une base de données de description de réseau (202) contenant des informations exploitées pour l'identification du niveau de vulnérabilité $v_i$ de chaque dispositif $i$ de la pluralité de dispositifs ;
- une base de données de préférences d'utilisateur (203) contenant des informations exploitées pour l'identification du niveau d'importance $r_i$ de chaque dispositif $i$ de la pluralité de dispositifs ;
- une unité d'estimation pour l'estimation du dommage provoqué sur le réseau quand au moins un des dispositifs est attaqué par au moins un agresseur, au moins un des dispositifs étant défendu par au moins un défenseur, le niveau de vulnérabilité $v_i$ et le niveau d'importance $r_i$ d'au moins un des dispositifs $i$ correspondants étant évalués ;
- un module de décision de jeu (205, 302) pour la résolution d'un jeu de sécurité en théorie des jeux défini sur la base du dommage estimé et pour le calcul d'une stratégie de défense correspondant à la solution du jeu de sécurité pour la recommandation d'une stratégie de défense,
- l'étape de définition du jeu de sécurité en théorie des jeux comprenant l'étape de génération d'une matrice de jeu NrxNr $|P(i,j)|$, la sélection du premier indice dans la première dimension de la matrice de jeu correspondant à la sélection d'un dispositif attaqué par un agresseur, et la sélection du deuxième indice dans la deuxième dimension de la matrice de jeu correspondant à la sélection d'un dispositif traité par un défenseur pour diminuer sa vulnérabilité à l'attaque,
- la solution du jeu de sécurité étant obtenue par résolution d'un jeu de sécurité agresseur-défenseur à deux joueurs, les joueurs dudit jeu de sécurité agresseur-défenseur à deux joueurs étant des joueurs abstraits comprenant chacun un ou plusieurs joueurs, les entrées de la matrice de jeu $|P(i,j)|$ étant définies comme fonctions d'appartenance floues,
- les valeurs de vulnérabilité et d'importance étant représentées par cinq niveaux et quantifiées par $v,r \in \{1,2,3,4,5\}$ et le niveau de vulnérabilité d'un dispositif étant sélectionné pour être la valeur maximale des vulnérabilités des catégories auxquelles il appartient.

15. Système selon la revendication 14, où le module de décision de jeu comprend un module à logique floue (302) pour la définition du jeu de sécurité en théorie des jeux.

16. Système selon la revendication 14 ou la revendication 15, comprenant en outre une unité de mise en correspondance d'informations décrivant des types d'attaques possibles sur le réseau avec des informations de réseau contenues dans la base de données de description de réseau (202) et décrivant des propriétés de vulnérabilité de chaque dispositif $i$ de la pluralité de dispositifs, l'unité de mise en correspondance étant préférentiellement un moteur de taxonomie (204), et/ou comprenant préférentiellement en outre une base de données de vulnérabilité (201) contenant les informations de sécurité décrivant des types d'attaques possibles sur le réseau et/ou une interface web permettant un accès à distance d'un expert à la base de données de vulnérabilité (201).

17. Système selon l'une des revendications 14 à 16, comprenant en outre une interface web permettant un accès à distance d'un utilisateur à la base de données de description de réseau (202) et/ou à la base de données de préférences d'utilisateur, et comprenant préférentiellement en outre une unité d'accès à distance permettant sélectivement un accès à distance d'un utilisateur.

Figure 1

Figure 2

NE Defense Strategy (Quantized)

## Figure 3

NE Strategies

## Figure 4

Figure 5

Figure 6

102 → **Security Experts**

103 → **Worst-case Attacker Model**

100 → **Users**

**Game Theoretic Recommendation System**

101

104 → **Recommended Vulnerability Management Strategy**

## Figure 7

From 102    201

**Vulnerability Database**

204

202 → **Network Description Database**

From 100

205

**Taxonomy Engine**

**Zero-sum Game Decision Module**

To 103

To 104

**User Preferences Database**

101    203

## Figure 8

From 102    201

Vulnerability Database

204    302

202

Network
Description
Database

Taxonomy
Engine

Fuzzy
Game
Decision
Module

To 103

To 104

From 100

Fuzzy User
Preferences Database

101    301

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060075503 A1
- US 20060101519 A1
- US 20080022397 A1
- US 20070067846 A1

### Non-patent literature cited in the description

- Stochastic games for security in networks with inter-dependent nodes. **NGUYEN, K.C. et al.** GAME THEORY FOR NETWORKS, 2009. GAMENETS '09. INTERNATIONAL CONFERENCE. IEEE, 2009, 697-703
- **WEI, JIANG et al.** A Stochastic Game Theoretic Approach to Attack Prediction and Optimal Active Defense Strategy Decision. *NETWORKING, SENSING AND CONTROL, 2008. ICNSC 2008. IEEE INTERNATIONAL CONFERENCE,* 2008, 648-653
- **ALPCAN, T. et al.** A game theoretic approach to decision and analysis in network intrusion detection. *42ND. IEEE CONFERENCE ON DECISION AND CONTROL,* December 2003, 2595-2600
- **ALPCAN, T. et al.** A game theoretic analysis of intrusion detection in access control systems. *DECISION AND CONTROL, 2004. CDC. 43RD IEEE CONFERENCE,* 2004, vol. 2, 1568-1573
- **ALPCAN, T. et al.** *An intrusion detection game with limited observations, http://www.tansu.alpcan.org/papers/isdg06.pdf*
- **XIA ZHENGYOU et al.** A kind of network security behavior model based on game theory. *PARALLEL AND DISTRIBUTED COMPUTING, APPLICATIONS AND TECHNOLOGIES, PROCEEDINGS OF THE FOURTH INTERNATIONAL CONFERENCE ON,* 27 August 2003, 950-954
- **WEI, JIANG et al.** Optimal Network Security Strengthening Using Attack-Defense Game Model. *INFORMATION TECHNOLOGY: NEW GENERATIONS, ITNG '09. SIXTH INTERNATIONAL CONFERENCE,* 475-480
- Fuzzy matrix games multi-criteria model for decision-making in engineering. **PELDSCHUS et al.** INFORMATICA. LITHUANIAN ACADEMY OF SCIENCE, 01 January 2005, vol. 16, 107-120
- **GARAGIC, D. ; CRUZ JR., J.B.** An Approach to Fuzzy Noncooperative Nash Games. *JOURNAL OF OPTIMIZATION THEORY AND APPLICATIONS,* 2003, vol. 118 (3), 475-491
- **SHAPIRO et al.** Fuzzy logic in insurance. *INSURANCE, MATHEMATICS AND ECONOMICS,* 2004, vol. 35 (2), 399-424